# EUROPEAN PATENT APPLICATION

(11) **EP 3 473 419 A1**
(43) Date of publication of application: **24.04.2019**
(21) Application number: 18201492.8
(22) Date of filing: 19.10.2018
(51) Int. Cl.: B29D 30/00, B60C 11/00, C08J 5/12, C08K 5/00, C23C 22/02, B05D 7/20

(54) **DEVICES AND METHODS FOR COATING WIRES**

(30) Priority: 20.10.2017 EP 17290132; 15.02.2018 EP 18156938
(71) Applicant: Société de Trefilerie d'Alsace SAS, 67110 Reichshoffen (FR); Wolf, Daniel, 33332 Gütersloh (DE); Verace BVBA, 1790 Essene (BE); Gustav Wolf Polska Sp. z o.o., 44-100 Gliwice (PL)
(72) Inventor: Van den Broecke, Hugo, 1790 Essene (BE); Wolf, Daniel, 33332 Gütersloh (DE)
(74) Representative: De Clercq & Partners

(57) **Abstract**

Devices, systems, methods, and a kit of parts for coating wires involving the use of two parallel, adjacently disposed rotatable absorbing disks. A coating fluid is continually applied to the absorbing disks. The coating fluid is applied to the wire by moving the wire between the disks, and contacting the wire with the disks while the disks rotate.

## Description

### TECHNICAL FIELD

The present invention is in the field of steel processing, in particular in the field of manufacturing tyre bead wires.

### BACKGROUND

Bead wires are used in a bundle for reinforcing the rim of rubber tyres. Generally, bead wires are copper-plated steel wires. One generic process flow comprises the following steps. A steel wire is pickled and is subsequently subjected to a number of successive cold drawings steps through dies having an increasingly smaller diameter until the wire's diameter has been reduced to 3-4 mm. Subsequently, the wire is subjected to a heat treatment. The heat treated wire is then pickled and coated again. The wire is then cold drawn to a diameter of typically < 1 mm. Wires of > 1mm are typically cold drawn without the intermediate heat treatment. Subsequent to cold drawing, the wire's surface is chemically pre-treated and it is subsequently plated with copper. Copper plating is typically done at very high wire velocities, e.g. a wire velocity of 400 m / minute.

After copper plating, a protective coumaran (2,3-dihydrobenzofuran) coating is applied which interacts with the later bond between rubber and the copper layer during the vulcanisation process. The coumaran coating is typically applied as a mixture of 3-10% resin and 90-97% xylene. After application, the xylene evaporates and the resin remains on the wire, thus forming a homogeneous coating.

Several methods are used in the prior art for applying coumaran coatings. One method involves applying coumaran as a powder, and subsequently heat treating the coated wire. Unfortunately, it is difficult to form a homogeneous coating by means of this method.

An alternative method involves pulling wire through a stationary piece of felt drenched with a coumaran-laden solution. This method results in a good, homogeneous coating when the felt is in mint condition. Unfortunately, the felt tends to be damaged easily because of intensive wear during normal use such that it has to be replaced regularly in order to ensure an acceptable coating quality. Also, small amounts of dirt which are unavoidably present on the wire tend to accumulate at the spot where the wire enters the felt. When accumulated dirt is dislodged, it compromises the coating homogeneity locally.

A homogeneous coating can be ensured by drawing copper-plated wire through a bath containing a mixture of 5-10% resin and 90-95% xylene, and subsequent blow-drying the wire. However, this entails a high evaporation loss of xylene which is blown of the wire - typical losses of xylene amount to typically 60 litres per day for a single industrial bead wire production line. This is disadvantageous because xylene is a valuable resource, and because xylene-air mixtures may have explosive properties.

Examples of coating methods which involve pulling a wire through a resin bath are disclosed in GB1342366 and GB898746.

Another alternative method solves the problems of requiring a large amount of consumables, and the problems related to xylene losses. In this method, a xylene-resin solution is maintained in a bath. A rotating drum is partly submerged in the bath. One part of the rotating drum extends above the surface of the xylene-resin solution and is in contact with a wire to be coated. As the drum rotates, xylene-resin solution adheres to the drum's surface, and it is transported to the wire. The wire to be coated moves at a speed which equals the peripheral velocity of the rotating drum. This limits the speed at which the system can operate: the faster the wire moves, the faster the drum rotates, and at high velocities, the adhesive forces between the solution and the drum cannot compensate any longer for the centrifugal forces caused by the drum's rotation, and the solution detaches from the drum during rotation. This causes splashes and a poor coating efficiency at high operating speeds. Accordingly, this method has the downside of only being able to operate at limited speeds.

An example of a coating method in which such a rotating drum is used is disclosed in EP2826554.

### SUMMARY

The devices and methods according to the present disclosure solve the aforementioned problems. The devices provided herein only suffer from limited wear on consumable parts, very high wire speeds can be used, large amounts of solvent losses are avoided, and a homogeneous coating is provided, even for very thin coating thicknesses. In addition, the present methods and devices are highly resilient with respect to residual pollution on copper plated wires.

In particular, provided herein is a method for coating a wire by means of a system comprising two parallel, adjacently disposed rotatable absorbing disks; the system being arranged to guide the wire between the two absorbing disks; the method comprising the steps:
- providing a wire at a wire velocity v_{w};
- continually applying a coating fluid to the absorbing disks;
- moving the wire between the two absorbing disks while the absorbing disks rotate at a roll rotational velocity ω_{f}, thereby contacting the wire by the disks and applying a coating to the wire.

In some embodiments, the system further comprises a coating fluid supply orifice, wherein the coating fluid is applied to the absorbing disks as a continual supply of a coating fluid droplets, the plurality of droplets being provided by means of the coating fluid supply orifice.

In some embodiments, the system further comprises a coating fluid reservoir; the coating fluid reservoir being filled with coating fluid; the absorbing disks being partially submerged in the coating fluid, wherein the wire is moved between the absorbing disks at a position above the fluid level in the coating fluid reservoir. Such an embodiment may alternatively be described as a method for coating a wire by means of a system comprising: two parallel, adjacently disposed rotatable absorbing disks; and a coating fluid reservoir; the coating fluid reservoir being filled with coating fluid; the two absorbing disks being partially submerged in the coating fluid, and the system being arranged to guide the wire between the two absorbing disks; the method comprising the steps:
- providing a wire at a wire velocity v_{w}; and,
- moving the wire between the two absorbing disks, and above the fluid level in the coating fluid reservoir, while the absorbing disks rotate at a roll rotational velocity ω_{f}, thereby contacting the wire by the disks and applying a coating to the wire.

In some embodiments, the wire is passed between the absorbing disks along a path that does not intersect the rotational axis of the absorbing disks.

In some embodiments, the wire is passed between the absorbing disks at a distance of 1.0 to 3.0 cm below the rotational axis of the absorbing disks. Preferably, the wire is passed between the absorbing disks at a distance of 1.4 to 1.6 cm below the rotational axis of the absorbing disks.

In some embodiments, the wire is moved between the absorbing disks at an oblique angle *α* with respect to the horizontal plane, *α* preferably being between 5° and 25°, for example between 10° and 20°, for example between 15° and 20°.

In some embodiments, the absorbing disks each comprise an absorbing layer and a carrier plate, and wherein the absorbing layers are pressed against each other, preferably by means of a force exercised on the carrier plates.

In some embodiments, the wire velocity v_{w} and the roll rotational velocity ω_{f} are independently selectable.

In some embodiments, the wire is passed between the absorbing disks along a path that intersects the rotational axis of the absorbing disks.

In some embodiments, the coating fluid comprises 2,3-dihydrobenzofuran (coumaran).

In some embodiments, the coating fluid is a mixture consisting essentially of 5-10 wt. % 2,3-dihydrobenzofuran (coumaran) and 90-95 wt. % xylene.

Further provided herein is a method for bonding copper-plated bead wire with rubber comprising the steps:
- providing a cold-drawn steel wire;
- copper-plating the cold-drawn steel wire, thus obtaining a copper-plated wire;
- applying a coating to the copper-plated wire by means of a method as provided herein; and,
- embedding the wire in a rubber matrix.

Further provided is a device for coating wires comprising two parallel, adjacently disposed rotatable absorbing disks, and a coating fluid supply orifice, the coating fluid supply orifice being disposed to provide a continual stream of coating fluid droplets to the absorbing disks. Preferably, the device further comprises a rotary actuator for actuating the rotatable absorbing disks. Preferably, the coating fluid supply orifice is disposed above the rotatable absorbing disks.

Further provided is a device for coating wires comprising two parallel, adjacently disposed rotatable absorbing disks, and a coating fluid reservoir; the coating fluid reservoir being filled with coating fluid; the two absorbing disks being partially submerged in the coating fluid. Preferably, the device further comprises a rotary actuator for actuating the rotatable absorbing disks.

In some embodiments, the coating fluid is a mixture consisting essentially of 3-10 wt. % 2,3-dihydrobenzofuran (coumaran) and 90-97 wt. % xylene.

Further provided is a system for coating wires comprising a device for coating wires as provided herein and a wire guide, the wire guide being arranged to guide wire between the two absorbing disks.

In some embodiments, the two rotatable absorbing disks are arranged to rotate at an absorbing disk rotational velocity ω_{f}, wherein the wire guide is arranged to move wire in between the absorbing disks at a wire velocity v_{w}, wherein the system further comprises a absorbing disk rotational velocity controller and a wire velocity controller, the absorbing disk rotational velocity controller and the wire velocity controller being configured for independently selecting the roll rotational velocity ω_{f} and the wire velocity v_{w}.

Further provided is a kit of parts for use in the assembly of a system as provided herein, the kit comprising two absorbing disks, a coating fluid reservoir, a controller for controlling absorbing disk rotational velocity ω_{f}, a controller for controlling wire velocity v_{w}, and at least one spring for exercising the force on the carrier plates.

### DESCRIPTION OF THE FIGURES

The following description of the figures of specific embodiments of the invention is only given by way of example and is not intended to limit the present explanation, its application or use. In the drawings, identical reference numerals refer to the same or similar parts and features.
**Fig.** 1 shows a frontal view of a device for coating wires as provided herein.
**Fig. 2** shows a lateral view of a device for coating wires as provided herein.
**Fig.** 3 shows a coating device in which a wire is moved between the absorbing disks under an oblique angle *α* with respect to the horizontal plane.
**Fig.** 4 shows a lateral view of a coating device in which coating fluid is provided by means of a coating fluid supply orifice (500).
**Fig.** 5 shows a frontal view of a coating device in which coating fluid is provided by means of a coating fluid supply orifice (500).

The following reference numerals are used in the description and figures:
100 - coating fluid reservoir; 200 - wire; 300 - absorbing disks; 310 - felt; 320 - carrier plate; 400 - indicator for force F; 500 - coating fluid supply orifice; 510 - droplet.

### DESCRIPTION OF THE INVENTION

As used below in this text, the singular forms "a", "an", "the" include both the singular and the plural, unless the context clearly indicates otherwise.

The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps. The enumeration of numeric values by means of ranges of figures comprises all values and fractions in these ranges, as well as the cited end points.

The term "approximately" as used when referring to a measurable value, such as a parameter, an amount, a time period, and the like, is intended to include variations of +/-10% or less, preferably +/-5% or less, more preferably +/-1% or less, and still more preferably +/-0.1 % or less, of and from the specified value, in so far as the variations apply to the invention disclosed herein. It should be understood that the value to which the term "approximately" refers per se has also been disclosed.

All references cited in this description are hereby deemed to be incorporated in their entirety by way of reference.

Unless defined otherwise, all terms disclosed in the invention, including technical and scientific terms, have the meaning which a person skilled in the art usually gives them. For further guidance, definitions are included to further explain terms which are used in the description of the invention.

Provided herein is a device for coating wires. The device comprises two parallel absorbing disks which are adjacently disposed. The absorbing disks are generally approximately cylindrical disks. They can efficiently take up (absorb) coating fluid they come in contact with. Any material which efficiently absorbs the coating fluid can be used for making the absorbing disks. One especially suitable material is felt. Preferably, the device further comprises a rotary actuator for actuating the rotatable absorbing disks.

In some embodiments, the device further comprises a coating fluid supply orifice. The coating fluid supply orifice is configured for applying coating fluid to the absorbing disks in the form of coating fluid droplets, preferably in the form of a continual supply of coating fluid droplets, more preferably in the form of a continuous supply of coating fluid droplets. Preferably, the fluid supply orifice is installed above the absorbing disks. This improves the homogeneity of the coating thus formed.

In other words, provided herein is a device for coating wires comprising two parallel, adjacently disposed rotatable absorbing disks and a coating fluid supply orifice. The coating fluid supply orifice is disposed to provide a continual stream of coating fluid droplets to the absorbing disks. Preferably, the coating fluid supply orifice is disposed above the rotatable absorbing disks.

Such processes allow minimal contact between the coating mixture and the surrounding air. This results in a drastically reduced amount of solvent (e.g. xylene) evaporation losses which has a several advantages. First, reduced solvent losses improve the environmental-friendliness of the present coating processes. In addition, reduced solvent losses contribute to maintaining the composition of the coating mixture constant which in turn results in reduced process variations.

Preferably, the coating fluid supply orifice is comprised in a fluidic system comprising a pump, preferably a micropump. The fluidic system is configured for providing a sequence of coating fluid droplets comprising between 5 and 17 µl per coating fluid droplet. This allows very accurately controlling the amount of coating fluid supplied to the rotating disks, and therefore the amount of coating applied to the wire.

With the use of a coating fluid supply it is possible to deliver a calibrated amount of coating fluid to the absorbing disks, guaranteeing a low variation of the amount of coating fluid in the absorbing disks. The use of a pump further ensures that the amount of coating fluid in the absorbing disks can be accurately controlled based on the specification of the customer on the final coating layer thickness, the concentration of the coating fluid, the diameter of the wire, the speed of the wire and on the fact of the wire is moving or not. In other words, in these embodiments, the coating fluid is provided at a flow rate which is determined based on the specification of a pre-determined final coating layer thickness, coating fluid concentration, wire diameter, wire speed, and based on whether or not the wire is moving.

Also, using a pump it is possible to adapt the amount of coating fluid in the absorbing disks in case the absorbing disks experience a fluid transmission reducing/increasing effect to the wire. This self regulating system guarantees the constant deposit of coating fluid on the wire at all times.

In some alternative embodiments, the device comprises a fluid reservoir which is filled with coating fluid. In such embodiments, the two absorbing disks are partially submerged in the coating fluid. By rotating the absorbing disks, coating fluid is efficiently taken up and distributed over their volume. The amount of coating transferred to the wire typically depends on the characteristics of the surface of the wire (smoother wires take up less coating fluid), the concentration of the coating fluid, the amount of coating fluid in the absorbing disks as well as the ability of the absorbing disks to absorb the coating fluid during the period it is submerged in the reservoir.

In some embodiments, the absorbing disks are submerged in coating fluid for between 1% and 20% of their diameter, for example between 2% and 10% of their diameter, or between 3% and 5% of their diameter. This strikes a good balance between drag caused by the coating fluid and efficacy of coating fluid uptake.

Due to their rotation, the absorbing disks continually contact the wire to be coated at a different position. As a result, wear of the absorbing disks is distributed over their surface, and the amount of wear at the position where the wire is contacted is reduced. This increases the longlivety of the absorbing disks, and it improves the homogeneity of the coating on the wire.

The precise orientation of the wire which is moved between the absorbing disks is not critical. In particular, the wire may be moved horizontally between the absorbing disks, or it may be moved between the absorbing disks at an oblique angle *α* with respect to the horizontal plane. In some embodiments, the angle *α* with respect to the horizontal plane is between 5° and 25°, for example between 10° and 20°, for example between 15° and 20°.

In some embodiments, the absorbing disks each comprise an absorbing layer and a carrier plate. The carrier plate is a rigid body which provides for mechanical strength and ensures structural integrity of the absorbing disks. Preferably, the carrier plate is made of a metal, for example steel or aluminium. The absorbing layer allows for coating fluid uptake. A felt is a particularly suitable absorbing layer.

Preferably, the device is configured for pressing the absorbing layers together, for example by means of a force F exercised on the carrier plates. In other words, the absorbing disks are preferably pressed together during coating. When the absorbing layer of the absorbing disks is pressed together, the absorbing layer contacts the wire circumferentially and a uniform coating can be formed on the wire.

In some embodiments, the absorbing disks are substantially cylindrical and have an equal diameter. The diameter of the absorbing disks is preferably between 10 and 20 cm.

In some embodiments, the absorbing disks comprise felt, preferably a felt layer applied to a carrier plate. In this case, the thickness of the felt layer is between 2 and 8 mm, for example about 5 mm. The rate of felt wear is generally between 0.5 mm and 2 mm per 24 hours, for example about 1.5 to 2 mm per 24 hours. These felt thicknesses allow for time between felt replacement of one to a few days.

In some embodiments, the coating fluid comprises 2,3-dihydrobenzofuran (coumaran). Coumaran has the advantage that it easily dissolves in xylene. Xylene evaporates very fast. Accordingly, a coumaran coating can be swiftly applied to a wire.

In some embodiments, the coating fluid is a mixture of 3-10 wt. % coumaran and 90-97 wt. % xylene. Note that xylene may be substituted with another solvent, provided that this solvent does not react with the wire which is coated.

In some embodiments, the two rotatable absorbing disks are arranged to rotate at an absorbing disk rotational velocity ω_{f}. Also, the wire guide is arranged to move wire in between the absorbing disks at a wire velocity v_{w}. In such embodiments, the system further comprises a absorbing disk rotational velocity controller and a wire velocity controller. The absorbing disk rotational velocity controller and the wire velocity controller are configured for independently controlling the roll rotational velocity ω_{f} and the wire velocity v_{w}. In other words, the absorbing disk rotational velocity controller controls the absorbing disk rotational velocity ω_{f}. The wire velocity controller controls the wire velocity v_{w}. The absorbing disk rotational velocity controller operates independently from the wire velocity controller. Accordingly, the wire velocity and the absorbing disk rotational velocity can be independently optimized for a specific process.

Typically, the absorbing disk rotational velocity is between 1 to 10 rpm, for example 2 to 5 rpm, for example about 3 rpm. In some embodiments, the absorbing disk rotational velocity is 1 to 3 rpm, or 3 to 5 rpm, or 5 to 7 rpm, or 7 to 10 rpm either clockwise or counter clockwise. At lower speeds, the absorbing disks absorb more coating fluid because of the longer contacting time with the coating fluid mixture, or because more droplets fall on the absorbing disks per amount of rotation of the rotating disks. Surprisingly, higher rotation speeds have the same effect when the set-up with the fluid reservoir is used because the mixture is renewed on the absorbing disks faster. For a coating fluid consisting of a coumaran-xylene mixture, and in a fluid-reservoir-based system, a rotational velocity of 3 rpm corresponds to the point at which the absorbing disks absorb the least amount of coating fluid.

Further provided herein is a system for coating wires. It comprises a device for coating wires as provided herein. The system further comprises a wire guide. The wire guide is arranged to guide wires between the two absorbing disks. Examples of suitable wire guides include orifices and rotatable support cylinders. Wires can be efficiently and economically coated by means of these systems.

In some embodiments, the device comprises two or more pairs of absorbing disks which are placed in series. In other words, in some embodiments, the system comprises two or more pairs of absorbing disks which are placed in series. A wire can be consecutively drawn through these absorbing disks. In these embodiments, the wire is preferably drawn between the absorbing disks at a position below the rotational axis of the absorbing disks, as was described above. This arrangement has the advantage that the absorbing disks can be replaced one by one, without having to shut down the coating line.

Provided herein is a method for coating a wire by means of a system comprising two parallel, adjacently disposed rotatable absorbing disks. Preferably, the system is a system as provided herein. The system is arranged to guide the wire between the two absorbing disks. The method comprises the steps of providing a wire at a wire velocity v_{w} and continually applying a coating fluid to the absorbing disks. At the same time, the wire is moved between the two absorbing disks, and the absorbing disks are rotated at a rotational velocity ω_{f}. As the wire is moved between the rotating absorbing disks, the wire is contacted by the disks, and the coating is applied to the wire. This method offers a good coating homogeneity and a limited coating fluid expense, resulting in limited material use.

In some embodiments, the method uses a system comprising a coating fluid supply orifice, as described above. In such embodiments, the coating fluid is applied to the absorbing disks in the form of coating fluid droplets. Preferably, the coating fluid droplets comprise between 5 and 17 µl per coating fluid droplet. This allows very accurately controlling the amount of coating fluid supplied to the rotating disks, and therefore the amount of coating applied to the wire.

In some embodiments, between 10 and 600 mg coating fluid per kg wire is applied to the wire. Preferably, between 20 and 40 mg coating fluid per kg wire is applied to the wire. In some embodiments, between 100 and 300 mg coating fluid per kg wire is applied to the wire.

Preferably, one droplet of coating fluid is applied to the absorbing disks per 5 to 10° of rotation of the absorbing disks.

The present methods allow obtaining highly homogeneous coatings, even at coating thicknesses of only a few micrometres or even less.

In some embodiments, the system used in the present method comprises a coating fluid reservoir. The coating fluid reservoir is filled with coating fluid and the absorbing disks are partially submerged in the coating fluid. The wire is moved between the absorbing disks at a position above the fluid level in the coating fluid reservoir.

In other words, in some embodiments, the present method is used for coating a wire by means of a device comprising a fluid reservoir which is filled with coating fluid, as was described above. In such embodiments, the two absorbing disks are partially submerged in the coating fluid, and the method comprises the following steps: providing a wire at a wire velocity v_{w}; and moving the wire between the two absorbing disks, and above the fluid level in the coating fluid reservoir, while the absorbing disks rotate at a roll rotational velocity ω_{f}. As a result, the wire is contacted by the absorbing disks and a coating is applied to the wire. Accordingly, wires can be coated efficiently, homogeneously, with limited wear of consumable parts, and with a limited amount of material use.

Additionally or alternatively, the method for coating a wire can be described as a method making use of a system comprising two parallel, adjacently disposed rotatable absorbing disks and a coating fluid reservoir. The coating fluid reservoir is filled with coating fluid. The two absorbing disks are partially submerged in the coating fluid. The system is arranged to guide the wire between the two absorbing disks. The method comprises the steps of providing a wire at a wire velocity v_{w}, and moving the wire between the two absorbing disks, and above the fluid level in the coating fluid reservoir. As the wire is moved between the two absorbing disks, the two absorbing disks rotate at a roll rotational velocity ω_{f}. Accordingly, the wire is contacted by the disks and a coating is applied to the wire.

Further provided is a method for bonding copper-plated bead wire with rubber. The method involves providing a cold-drawn steel wire and copper-plating the cold-drawn steel wire, thus obtaining a copper-plated wire. A coating is applied to the copper-plated wire by means of a method provided herein before the wire is embedded in a rubber matrix. Such methods allow an excellent bond to be formed between the rubber matrix and the copper-plated wire.

Preferably, the absorbing disks each comprise felt and a carrier plate, as described above. In these embodiments, the method involves pressing the felt of the two disks together by applying a force F to the carrier plates. As the wire is moved between the absorbing disks, the felt of the two disks circumferentially contacts the wire and the coating fluid is homogeneously applied.

In some embodiments, the wire velocity v_{w} and the roll rotational velocity ω_{f} are independently selectable. This allows optimizing the roll rotational velocity for a given wire velocity and for a specific wire and/or coating fluid type.

The precise orientation of the wire which is moved between the absorbing disks is not critical. In particular, the wire may be moved horizontally between the absorbing disks, or it may be moved between the absorbing disks at an oblique angle *α* with respect to the horizontal plane. In some embodiments, the angle *α* with respect to the horizontal plane is between 5° and 25°, for example between 10° and 20°, for example between 15° and 20°.

In some embodiments, the wire is passed between the absorbing disks along a path that intersects the rotational axis of the absorbing disks .

In some embodiments, the wire is passed between the absorbing disks along a path that does not intersect the rotational axis of the absorbing disks.

In some embodiments, the wire is passed between the absorbing disks at a distance of 1.0 to 3.0 cm below the rotational axis of the absorbing disks. Preferably, the wire is passed between the absorbing disks at a distance of 1.4 to 1.6 below the rotational axis of the absorbing disks. More preferably, the wire is passed about 1.5 cm below the rotational axis of the absorbing disks. This has the advantage that the felts can be easily removed and replaced. Also, when the device comprises multiple pairs of absorbing disks in series, two adjacent absorbing disks can be easily replaced during operation, thereby eliminating the need for line shut down when the felt needs to be replaced.

In some embodiments, the coating fluid comprises 2,3-dihydrobenzofuran (coumaran). Coumaran is highly effective at impacting the bond between rubber and copper-plated wires.

In some embodiments, the coating fluid is a mixture comprising 3-10 wt.% 2,3-dihydrobenzofuran (coumaran) and 90-97 wt. % xylene. In some embodiments, the coating fluid consists essentially of 3-10 wt. % coumaran and 90-97 wt.% xylene. Such coating fluids are particularly easy to apply to copper-plated steel wires. Further provided herein is a kit of parts for use in the assembly of a system provided herein. The kit of parts comprises two absorbing disks, optionally a coating fluid reservoir, a controller for controlling absorbing disk rotational velocity ω_{f}, a controller for controlling wire velocity v_{w}, and at least one spring for exercising the force on the carrier plates. Optionally, the kit of parts comprises instructions for executing a method for coating a wire as provided herein. The present kit of parts allows effective assembly of the systems provided herein.

The present invention is further illustrated by way of the following numbered embodiments:
Embodiment 1. A method for coating a wire by means of a system comprising: two parallel, adjacently disposed rotatable absorbing disks (300); and a coating fluid reservoir (100); the coating fluid reservoir (100) being filled with coating fluid; the two absorbing disks (300) being partially submerged in the coating fluid, and the system being arranged to guide the wire (200) between the two absorbing disks (300); the method comprising the steps:
   - providing a wire (200) at a wire velocity v_{w}; and,
   - moving the wire between the two absorbing disks (300), and above the fluid level in the coating fluid reservoir (100), while the absorbing disks (300) rotate at a roll rotational velocity ω_{f}, thereby contacting the wire by the disks and applying a coating to the wire.
Embodiment 2. The method according to embodiment 1 wherein the wire (200) is passed between the absorbing disks (300) along a path that does not intersect the rotational axis of the absorbing disks (300).
Embodiment 3. The method according to embodiment 2 wherein the wire (200) is passed between the absorbing disks (300) at a distance of 1.0 to 3.0 cm below the rotational axis of the absorbing disks (300), preferably wherein the wire (200) is passed between the absorbing disks (300) at a distance of 1.4 to 1.6 cm below the rotational axis of the absorbing disks (300).
Embodiment 4. The method according to any one of embodiments 1 to 3 wherein the wire (200) is moved between the absorbing disks (300) at an oblique angle *α* with respect to the horizontal plane, *α* preferably being between 5° and 25°, for example between 10° and 20°, for example between 15° and 20°.
Embodiment 5. The method according to any one of embodiments 1 to 4 wherein the absorbing disks (300) each comprise an absorbing layer (310) and a carrier plate (320), and wherein the absorbing layers (310) are pressed against each other, preferably by means of a force exercised on the carrier plates (320).
Embodiment 6. The method according any one of embodiments 1 to 5 wherein the wire velocity v_{w} and the roll rotational velocity ω_{f} are independently selectable. Embodiment 7. The method according to any one of embodiments 1 or 4 to 6 wherein the wire (200) is passed between the absorbing disks along a path that intersects the rotational axis of the absorbing disks (300).
Embodiment 8. The method according to any one of embodiments 1 to 7 wherein the coating fluid comprises 2,3-dihydrobenzofuran (coumaran).
Embodiment 9. The method according to embodiment 8 wherein the coating fluid is a mixture consisting essentially of 5-10 wt. % 2,3-dihydrobenzofuran (coumaran) and 90-95 wt. % xylene.
Embodiment 10. A method for bonding copper-plated bead wire with rubber comprising the steps:
   - providing a cold-drawn steel wire;
   - copper-plating the cold-drawn steel wire, thus obtaining a copper-plated wire;
   - applying a coating to the copper-plated wire by means of a method according to any one of embodiments 1 to 9; and,
   - embedding the wire in a rubber matrix.
Embodiment 11. A device for coating wires comprising two parallel, adjacently disposed rotatable absorbing disks (300), and a coating fluid reservoir (100); the coating fluid reservoir (100) being filled with coating fluid; the two absorbing disks (300) being partially submerged in the coating fluid.
Embodiment 12. The device according to embodiment 11 wherein the coating fluid is a mixture consisting essentially of 3-10 wt. % 2,3-dihydrobenzofuran (coumaran) and 90-97 wt. % xylene.
Embodiment 13. A system for coating wires comprising a device for coating wires according to any one of embodiments 11 or 12 and a wire guide, the wire guide being arranged to guide wire between the two absorbing disks (300).
Embodiment 14. The system according to embodiment 13 wherein the two rotatable absorbing disks are arranged to rotate at an absorbing disk rotational velocity ω_{f}, wherein the wire guide is arranged to move wire in between the absorbing disks at a wire velocity v_{w}, wherein the system further comprises a absorbing disk rotational velocity controller and a wire velocity controller, the absorbing disk rotational velocity controller and the wire velocity controller being configured for independently selecting the roll rotational velocity ω_{f} and the wire velocity v_{w}.
Embodiment 15. A kit of parts for use in the assembly of a system according to embodiment 13 or 14 comprising two absorbing disks (300), a coating fluid reservoir (100), a controller for controlling absorbing disk rotational velocity ω_{f}, a controller for controlling wire velocity v_{w}, and at least one spring for exercising the force on the carrier plates.

### EXAMPLES

### Example 1

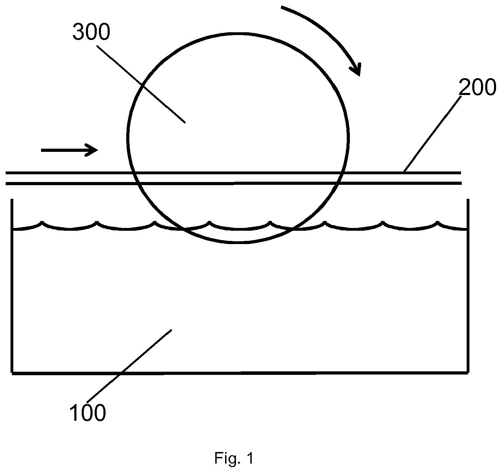

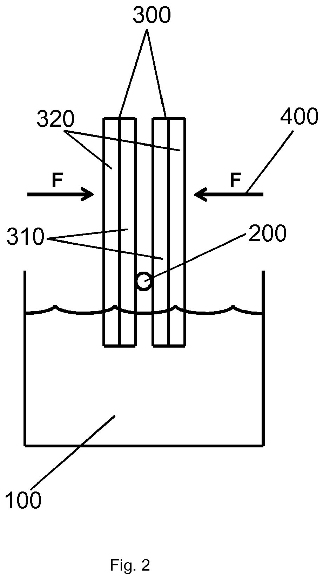

Reference is made to Figs. 1 and 2. Fig. 1 shows a frontal view of a device provided herein. Fig. 2 shows a lateral view of the same device. The device comprises two adjacent absorbing disks (300) which are partly immersed in a liquid comprised in a coating fluid reservoir (100). The absorbing disks (300) each comprise felt (310) and a carrier plate (320). The felt (310) of the two absorbing disks (300) is pressed together by force exercised on the carrier plates (320). Also, the absorbing disks (300) can be rotated by means of a rotary actuator. The liquid comprises a solvent, e.g. xylene, and a resin, e.g. coumaran. A wire (200) is continually moved in between the two absorbing disks (200), and above the level of the liquid in the coating fluid reservoir (100). The absorbing disks (300) continually rotate. The rotational speed of the absorbing disks (300) is independent of the speed at which the wire (200) moves between the absorbing disks (300). The disks' rotation ensures efficient liquid uptake. The liquid which is absorbed by the disks (300) is transferred to the wire (200) by virtue of continual contact between the wire (200) and the disks (300). Because the felt (310) of the absorbing disks is pressed together, the felt (310) contacts the wire (200) circumferentially and a uniform coating can be formed on the wire (200). Also, because the disks (300) rotate, the felt surface by which the wire (200) is contacted is constantly renewed. This helps supplying liquid to the wire. In addition, it helps managing wear of the absorbing disks by friction with the wire: as is the case in prior art systems in which felt is used, the felt wears because of the interactions with the wire. In prior art systems, the wear occurs at a single location. Conversely, the wear is distributed across the entire absorbing disks (300) in the present device. Because wear is less localized in the present devices, the wear of the surface where the wire is contacted is reduced, and the number of maintenance interventions which are needed is consequently reduced.

### Example 2

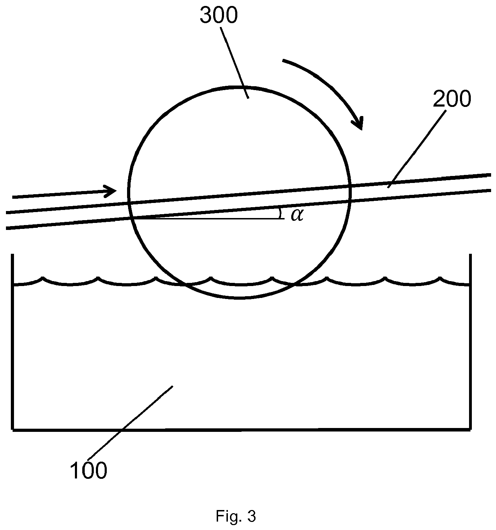

Reference is made to Fig. 3. Fig. 3 shows a device provided herein. The device is similar to the device of example 1, except that the wire is moved between the absorbing disks under an oblique angle *α* with respect to the horizontal plane. *α* equals 15°.

### Example 3

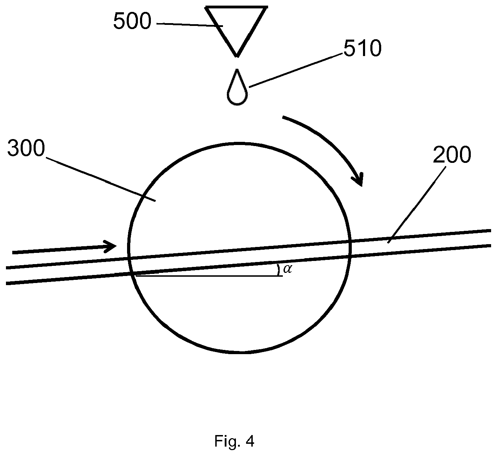

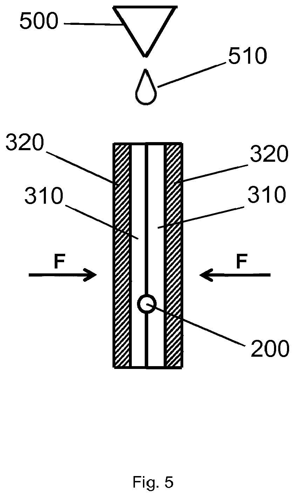

Reference is made to Figs. 4 and 5. Both Fig. 4 and Fig. 5 show a device as provided herein. A wire (200) is coated by moving the wire between two rotating absorbing disks (300). The absorbing disks (300) can be rotated by means of a rotary actuator. The absorbing disks (300) comprise felt (310) and a carrier plate (320). The felt (310) of the two absorbing disks (300) is pressed together by force exercised on the carrier plates (320), as indicated in Fig. 5 by the symbol 'F'.

Coating fluid is provided to the absorbing disks (300) by means of a coating fluid supply orifice (500) in the form of droplets (510) which fall down on the absorbing disks (300). In particular, the coating fluid supply orifice is a microcoating fluid supply orifice which is capable of providing coating fluid droplets having a volume between 5 and 17 microlitres, and which is positioned above the absorbing disks (300). The rate at which the droplets are produced by the coating fluid supply orifice (500) is determined based on the specification of the customer on the final coating layer thickness, the concentration of the coating fluid, the diameter of the wire, the speed of the wire and on the fact of the wire is moving or not.. In particular, the coating fluid supply orifice (500) provides one droplet per 5-10° of rotation of the absorbing disks (300).

## Claims

1. A method for coating a wire by means of a system comprising two parallel, adjacently disposed rotatable absorbing disks (300); the system being arranged to guide the wire (200) between the two absorbing disks (300); the method comprising the steps:
- providing a wire (200) at a wire velocity v_{w};
- continually applying a coating fluid to the absorbing disks (300);
- moving the wire between the two absorbing disks (300) while the absorbing disks (300) rotate at a roll rotational velocity ω_{f}, thereby contacting the wire by the disks and applying a coating to the wire.

2. The method according to claim 1 wherein the system further comprises a coating fluid supply orifice, and wherein the coating fluid is applied to the absorbing disks (300) as a continual supply of a coating fluid droplets (510), the plurality of droplets (510) being provided by means of the coating fluid supply orifice (500).

3. The method according to claim 1 wherein the system further comprises a coating fluid reservoir (100); the coating fluid reservoir (100) being filled with coating fluid; the absorbing disks (300) being partially submerged in the coating fluid, wherein the wire (200) is moved between the absorbing disks (300) at a position above the fluid level in the coating fluid reservoir (100).

4. The method according to any one of claims 1 to 3 wherein the wire (200) is passed between the absorbing disks (300) along a path that does not intersect the rotational axis of the absorbing disks (300).

5. The method according to any one of claims 1 to 4 wherein the absorbing disks (300) each comprise an absorbing layer (310) and a carrier plate (320), and wherein the absorbing layers (310) are pressed against each other, preferably by means of a force exercised on the carrier plates (320).

6. The method according any one of claims 1 to 5 wherein the wire velocity v_{w} and the roll rotational velocity ω_{f} are independently selectable.

7. The method according to any one of claims claim 1 to 6 wherein the wire (200) is passed between the absorbing disks along a path that intersects the rotational axis of the absorbing disks (300).

8. The method according to any one of claims 1 to 7 wherein the coating fluid comprises 2,3-dihydrobenzofuran (coumaran); preferably wherein the coating fluid is a mixture consisting essentially of 5-10 wt. % 2,3-dihydrobenzofuran (coumaran) and 90-95 wt. % xylene.

9. The method according to any one of claims 1 to 8 wherein the coating fluid is provided at a flow rate which is determined based on the specification of a pre-determined final coating layer thickness, coating fluid concentration, wire diameter, wire speed, and based on whether or not the wire is moving.

10. A method for bonding copper-plated bead wire with rubber comprising the steps:
- providing a cold-drawn steel wire;
- copper-plating the cold-drawn steel wire, thus obtaining a copper-plated wire;
- applying a coating to the copper-plated wire by means of a method according to any one of claims 1 to 9; and,
- embedding the wire in a rubber matrix.

11. A device for coating wires comprising two parallel, adjacently disposed rotatable absorbing disks (300), a rotary actuator for actuating the rotatable absorbing disks, and a coating fluid supply orifice (500), the coating fluid supply orifice (500) being disposed above the rotatable absorbing disks (300) to provide a continual stream of coating fluid droplets to the absorbing disks.

12. A device for coating wires comprising two parallel, adjacently disposed rotatable absorbing disks (300), a rotary actuator for actuating the rotatable absorbing disks, and a coating fluid reservoir (100); the coating fluid reservoir (100) being filled with coating fluid; the two absorbing disks (300) being partially submerged in the coating fluid.

13. The device according to claim 11 or 12 wherein the coating fluid is a mixture consisting essentially of 3-10 wt. % 2,3-dihydrobenzofuran (coumaran) and 90-97 wt. % xylene.

14. A system for coating wires comprising a device for coating wires according to any one of claims 11 to 13 and a wire guide, the wire guide being arranged to guide wire between the two absorbing disks (300).

15. The system according to claim 14 wherein the two rotatable absorbing disks are arranged to rotate at an absorbing disk rotational velocity ω_{f}, wherein the wire guide is arranged to move wire in between the absorbing disks at a wire velocity v_{w}, wherein the system further comprises a absorbing disk rotational velocity controller and a wire velocity controller, the absorbing disk rotational velocity controller and the wire velocity controller being configured for independently selecting the roll rotational velocity ω_{f} and the wire velocity v_{w}.
